# EUROPEAN PATENT APPLICATION

(11) **EP 3 333 388 A1**
(43) Date of publication of application: **13.06.2018**
(21) Application number: 16203476.3
(22) Date of filing: 12.12.2016
(51) Int. Cl.: F01N 3/20, F01N 11/00

(54) **METHOD AND DEVICE FOR MONITORING AN SCR INJECTION SYSTEM**

(71) Applicant: Perkins Engines Company Limited, Cambridgeshire PE1 5FQ (GB)
(72) Inventor: Gharpure, Siddharth Subhash, Peterborough, PE7 8DG (GB); Palmer, Ivan, Huntingdon, PE26 2WE (GB)
(74) Representative: Kramer Barske Schmidtchen Patentanwälte PartG mbB

(57) **Abstract**

A method for monitoring an SCR injection system (50) is disclosed. A pump (54) of the SCR injection system (50) is operated to maintain a constant operating pressure in the SCR injection system (50). A reductant injector (32) of the SCR injection system (50) is actuated for an injector actuation time period. At least one operating condition of the pump (54) at least during the injector actuation time period of the reductant injector (32) is monitored. It is determined to perform a deposit mitigation strategy based on the monitored operating condition of the pump (54) and the injector actuation time period of the reductant injector (32).

## Description

### Technical Field

The present disclosure relates to a method for monitoring an SCR injection system, and a related SCR injection system.

### Background

Engine systems for vehicles and the like may comprise an aftertreatment module for removing unwanted gaseous emissions or pollutants from the exhaust gases of an internal combustion engine. In particular, a selective catalytic reduction system (SCR) may be provided in the exhaust gas system for removing nitrogen oxides (NOx). Typically, an SCR system comprises a reductant injector reaching into a mixing pipe located upstream of a catalyst. The reductant injector may inject a liquid reductant into the exhaust gases before they contact the catalyst. Suitable liquid reductants may include anhydrous ammonia, aqueous ammonia and urea. The high temperature of the exhaust gases may evaporate the liquid reductant and upon contact with the catalyst, the gaseous reductant may react with the NOx in the exhaust gas to form nitrogen and water.

However, if the exhaust gas temperature is too low, such as during low engine load conditions and in low duty cycles, the reductant may be deposited as solid compounds on components of the SCR system. In particular, the reductant may be deposited on or around an outlet nozzle of the reductant injector when eddy currents in the exhaust gas flow redirect injected reductant back onto the outlet nozzle. In addition, the reductant injector may undesirably leak small volumes of reductant, particularly when it is fully pressurized, onto the outlet nozzle. Since the outlet nozzle of the reductant injector may have a relatively low surface temperature due to low exhaust gas temperature, the redirected and leaked reductant may condense on it and the liquid components of the reductant may evaporate. Solid reductant deposits may subsequently be left on the outlet nozzle, which may therefore become partially or fully blocked. This may lead to increased reductant deposit growth and cause poor SCR system conversion efficiency. Additionally, for example, re-circulation zones in the exhaust mass flow caused by the design of the exhaust lines may cause deposits at or near a nozzle outlet of the reductant injector.

For example, US 2016/0298515 A1 of Perkins Engines Company Limited discloses a method of controlling an engine system having an aftertreatment module within which a reductant injector is located. The reductant injector may be controlled to inject reductant fluid to expel solid reductant deposits formed on the reductant injector.

The present disclosure is directed, at least in part, to improving or overcoming one or more aspects of prior systems.

### Summary of the Disclosure

In one aspect, a method for monitoring an SCR injection system is disclosed. The SCR injection system includes a pump and a reductant injector. The method includes operating the pump to maintain a constant operating pressure in the SCR injection system. The method further includes actuating the reductant injector for an injector actuation time period, and monitoring at least one operating condition of the pump at least during the injector actuation time period of the reductant injector. It is determined to perform a deposit mitigation strategy based on the monitored operating condition of the pump and the injector actuation time period of the reductant injector.

In another aspect, an SCR injection system for an internal combustion engine is disclosed. The SCR injection system comprises a reductant tank, a reductant injector, and a pump fluidly connecting the reductant tank and the reductant injector. The SCR injection system further includes a control unit that performs a method as disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic of an engine system suitable for implementing a method and SCR injection system according to the present disclosure;
Fig. 2 is a schematic of an exhaust aftertreatment module of the engine of Fig. 1;
Fig. 3 is a schematic of a reductant injector of the exhaust aftertreatment module of Fig. 2; and
Fig. 4 is a diagram showing different developments of an exemplary operating condition of a pump of an SCR injection system, and associated clogging states of an outlet of a reductant injector.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that deposits at an outlet of a nozzle of a reductant injector reduce a flow cross-section through the reductant injector. Less reductant passes through a partially clogged nozzle outlet of the reductant injector compared to a clean nozzle outlet. To maintain a constant pressure in the SCR injection system upstream of the nozzle outlet during injection of the reductant, the pump of the SCR injection system must work harder in case more reductant is injected, that is, in case the nozzle outlet of the reductant injector is clean. As a result, an operating condition of the pump changes.

Accordingly, herein it is suggested to determine whether a deposit mitigation strategy is required based on at least one operating condition of the pump of the SCR injection system, particularly a rate of change of at least one operating condition, and an actuation time period of the reductant injector. More particularly, it was found that a rate of change of a duty cycle of the pump and/or a rate of change of a current input of the pump are particularly suitable for detecting clogging of a nozzle outlet of the reductant injector. Further parameters that may be used are an actuation time of the reductant injector and a current input of the pump.

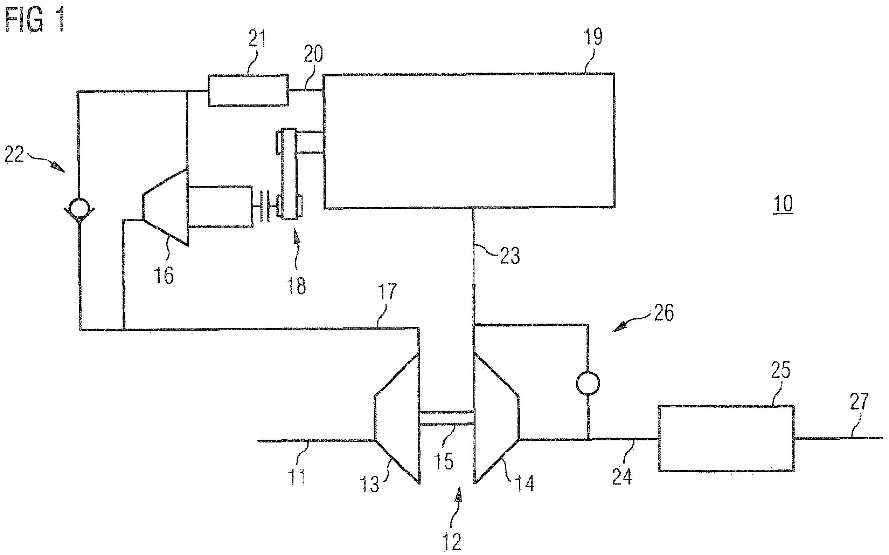

FIG. 1 illustrates an exemplary embodiment of an engine system 10 suitable for implementing the method and SCR injection system of the present disclosure. The engine system 10 comprises an engine 19, and an aftertreatment module 25. Additionally, as shown in Fig. 1, the engine system 10 may comprise a turbocharger 12, a supercharger 16, and a cooler 21.

Particularly, the engine system 10 comprises a first conduit 11 for directing intake gas, such as atmospheric air, to the turbocharger 12. The turbocharger 12 comprises a turbocharger compressor 13. The turbocharger compressor 13 is connected to the first conduit 11 and arranged to be driven by a turbine 14 via a shaft 15. The engine system 10 further comprises the supercharger 16 for receiving intake gas from the turbocharger compressor 13 via a second conduit 17. A supercharger drive arrangement 18 may be provided for selectively driving the supercharger 16. The engine 19 is arranged to provide power to the supercharger 16 mechanically via the supercharger drive arrangement 18.

In the shown embodiment, the engine system 10 further comprises a third conduit 20 for directing the intake gas from the supercharger 16 to the cooler 21. The engine system 10 further comprises a supercharger bypass arrangement 22 for selectively allowing intake gas to bypass the supercharger 16.

The engine 19 may be an internal combustion engine, such as a compression-ignition or spark-ignition engine. Fuel, such as diesel, gasoline or natural gas, may be selectively provided to engine cylinders in the engine 19 to combust with the intake gas and drive the pistons, thereby rotating a crankshaft and providing an engine output torque and power. The by-product of the combustion process is exhaust gas, which is directed from the engine cylinders along a fifth conduit 23 of the engine system 10 for example, via an exhaust manifold. The exhaust gas may comprise unwanted gaseous emissions or pollutants, such as nitrogen oxides (NOx), particulate matter (such as soot), sulphur oxides, carbon monoxide, unburnt hydrocarbons and/or other organic compounds. The fifth conduit 23 directs exhaust gas from the engine 19 to the turbine 14 of the turbocharger 12. The engine system 10 further comprises a sixth conduit 24 for directing exhaust gas from the turbine 14 to the exhaust aftertreatment module 25. A turbine bypass arrangement 26 may be provided for selectively allowing exhaust gas to bypass the turbine 14.

The exhaust aftertreatment module 25 receives and treats the exhaust gas to remove pollutants prior to directing the exhaust gas to atmosphere via a seventh conduit 27.

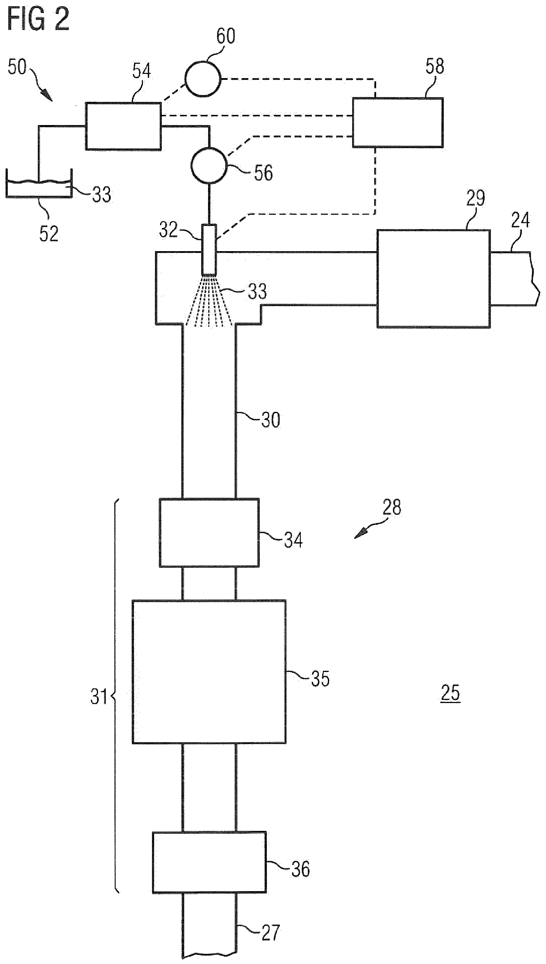

As illustrated in further detail in FIG. 2, the exhaust aftertreatment module 25 may comprise a selective catalytic reduction (SCR) system 28 and may comprise a diesel oxidation catalyst (DOC) 29. The DOC 29 may be arranged to receive exhaust gases from the sixth conduit 24 and located upstream of the SCR system 28. The SCR system 28 comprises an SCR conduit 30 leading from the DOC 29 to an SCR catalyst arrangement 31. The SCR system 28 further comprises an SCR injection system 50.

The SCR injection system 50 comprises a reductant injector 32, a reductant tank 52, and a pump 54. The reductant injector 32 reaches into the SCR conduit 30 for selectively injecting reductant fluid 33 into the SCR conduit 30 upstream of the SCR catalyst arrangement 31. The reductant tank 52 is configured to store the reductant fluid 33, which may comprise aqueous urea, aqueous ammonia or the like. In particular, the reductant fluid 33 may be diesel exhaust fluid (DEF) and the DEF may meet the IS022241 standard and comprise from 31.8% to 33.2% urea by weight. The pump 54 is configured to pump the reductant fluid 33 from the reductant tank 52 to the reductant injector 32 during priming and normal operations. The pump 54 is further configured to pump a fluid from the reductant injector 32 to the reductant tank 52 during a purging operation. For example, the pump 54 may be a diaphragm pump. Additionally, a fluid pressure sensor 56 is arranged and configured to measure a fluid pressure of the reductant fluid 33 in and/or downstream of the pump 54. In the shown embodiment, the fluid pressure sensor 56 is connected to a fluid connection between the pump 54 and the reductant injector 32. Alternatively, for example, the fluid pressure sensor 56 may be integrated in the pump 54 and/or in the reductant injector 32

Furthermore, a control unit 58 is communicatively connected to the pump 54, the pressure sensor 56 and the reductant injector 32. The control unit 58 is configured to receive pressure data from the pressure sensor 56, to control the pump 54, and to control (actuate) the reductant injector 32. The control unit 58 may be communicatively connected to at least one operation condition sensor 60. The operation condition sensor 60 is associated with the pump 54, and configured to detect and output a value associated with an operation condition of the pump 54. For example, the operating condition sensor 60 may be an amperemeter configured to monitor a current input of the pump 54. Additionally or alternatively, the operating condition sensor 60 may be a timer or a counter for measuring an actuation time period of the pump 54, an actuation frequency of the pump 54 and/or a duty cycle of the pump 54. The timer is configured to measure actuation time periods of the pump 54. The counter is configured to count actuations of the pump 54. In some embodiments, the sensor 60 may be configured as a flow measuring device for measuring a flow rate generated by the pump 54, and/or a speed measuring device for measuring a speed of the pump 54. The control unit 58 is further configured to receive data from the at least one operating condition sensor 60.

In the shown embodiment, the SCR catalyst arrangement 31 comprises, in the direction of exhaust gas flow, a mixer 34, a catalyst substrate 35 and a further oxidation catalyst or AMOx 36. The reductant injector 32 may selectively inject the reductant fluid 33, preferably as a liquid, into the stream of exhaust gas to provide a dose of reductant fluid 33 to the SCR catalyst arrangement 31. The high exhaust gas temperature may cause the reductant fluid 33 to evaporate and the resulting combination of gases may contact the catalyst substrate 35. The reductant fluid 33 may react with the NOx in the exhaust gas to reduce it to nitrogen and water, which may pass out of the engine system 10 via the seventh conduit 27. The catalyst substrate 35 may comprise zeolites, vanadium or the like.

The engine system 10 may further comprise at least one sensor arranged to sense one or more parameters relating to one or more of the components of the engine system 10 and send signals relating thereto to the control unit 58. In particular, the engine system 10 may comprise a temperature sensor in communication with the control unit 58 for determining the exhaust gas temperature at the outlet of the engine 19 and/or in the exhaust aftertreatment module 25. In some embodiments, the control unit 58 may also be in communication with one or more actuators for controlling the operation of the engine 19. In particular, the control unit 58 may be operable to control the turbocharger 12, the supercharger 16, the rate of fuel injection to the engine 19 and the injection of the reductant fluid 33 by the reductant injector 32. The control unit 58 may be a computer and may be operable to store and implement one or more computer programs and may comprise at least one memory, at least one processing unit and at least one communication means. The control unit 58 may be an engine control unit (ECU).

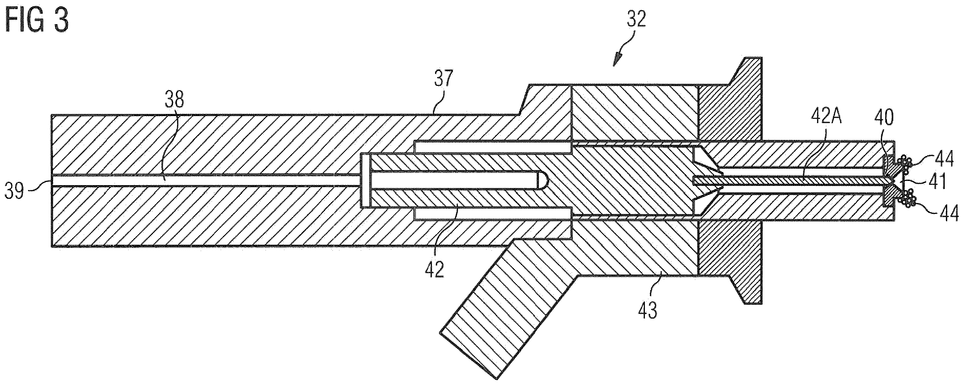

An exemplary reductant injector 32 suitable for such an engine system 10 is illustrated in FIG. 3. The reductant injector 32 comprises a housing 37 for mounting in the SCR system 28, particularly in the wall of the SCR conduit 30, upstream of the SCR catalyst arrangement 31. Inside the housing 37 a passageway 38 leads from a reductant fluid inlet 39 to a nozzle 40 and injector or nozzle outlet 41. The reductant fluid inlet 39 is in fluid communication with the pump 54 (see Fig. 2). A valve member 42, for example including a needle element 42A, is located within the passageway 38. The valve member 42 is moveable by an actuator 43 between an open position and a closed position. The actuator 43 may be an electrically activated solenoid or the like. The actuator 43 is communicatively connected to the control unit 58 such that the control unit 58 controls the movement of the valve member 42 (the needle element 42A) between the open and closed positions. The closed position is illustrated in FIG. 3.

During operation of the engine system 10, the control unit 58 controls the injection of reductant fluid 33 in order to control the reduction of NOx by the SCR system 28. During injection, the reductant fluid 33 may be directed back onto the nozzle 40 after injection by eddy currents or gas recirculation in exhaust gases passing through the SCR conduit 30. Additionally, when the reductant injector 32 is in the closed position reductant fluid 33 may leak through the injector outlet 41 due to the high pressure of the reductant fluid 33 in the passageway 38. Leakage of reductant fluid 33 may be particularly likely in aged and worn reductant injectors 32. The leaked reductant fluid 33 may cause reductant fluid 33 to deposit on the nozzle 40. The amount leaked and deposited may be increased if the reductant injector 32 is not opened for a prolonged period of time. The nozzle 40 may typically have a relatively low surface temperature, such as around 100°C, such that the reductant fluid 33 on the nozzle 40 may condense. The liquid components of the reductant fluid 33 may subsequently evaporate and solid reductant deposits 44 may remain on the nozzle 40. FIG. 3 illustrates the reductant injector 32 in the closed position with solid reductant deposits 44 formed on the nozzle 40 partially blocking the injector outlet 41. The interruption of flow of the reductant fluid 33 from the reductant injector 32 may reduce the conversion efficiency of the SCR system 28. If these solid reductant deposits 44 build up further they may fully block the injector outlet 41.

The present disclosure suggests to detect formation of deposits at or near the nozzle 40 by monitoring at least one operating condition of the pump 54 during an actuation of the reductant injector 32. The at least one operating condition may be, for example, an actuation time period of the pump 54, an actuation frequency of the pump 54, a flow rate of the pump 54, a speed of the pump 54, a duty cycle of the pump 54, and/or a power input of the pump 54, particularly a current input of the pump 54. As used herein, the term "pump duty cycle" is the fraction of one period in which the pump 54 is active (pumps). A duty cycle is commonly expressed as a percentage or a ratio. Particularly, a rate of change of the at least one operating condition of the pump 54 may be monitored. Based on the at least one monitored operating condition of the pump 54 and the actuation time period of the reductant injector 32, it is determined whether or not to perform a deposit mitigation strategy for reducing deposits at or near the outlet 41 of the reductant injector 32.

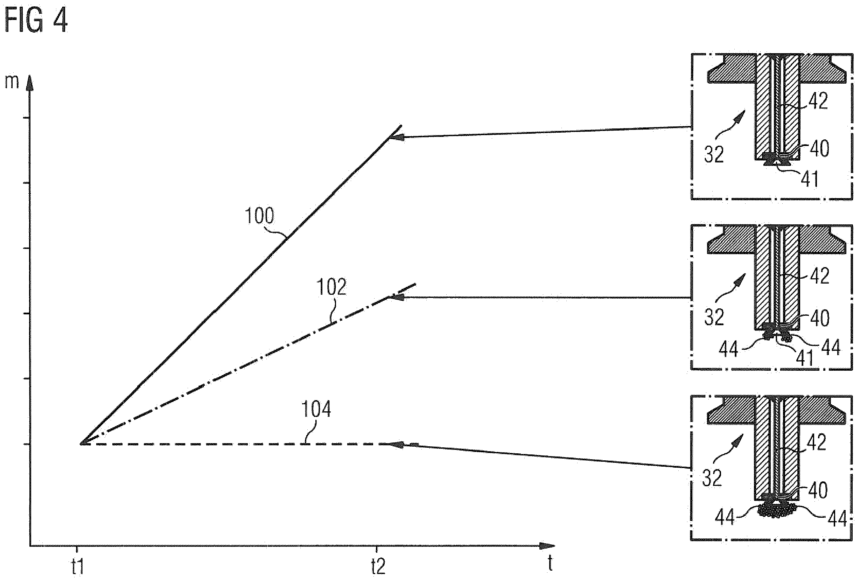

Referring to Fig. 4, an exemplary method for monitoring an SCR injection system 50 is described in the following.

Fig. 4 shows three exemplary rates of change m of an operating condition of the pump 54 over a time period t. It is noted that the three developments shown in Fig. 4 are idealized to ease understanding. For example, the rate of change may relate to a rate of change of a current input of the pump 54, or a rate of change of a duty cycle of the pump 54. A first development is indicated by a solid line and referred to by reference numeral 100. A second development is indicated by a dashed-dotted line and referred to by reference numeral 102. Lastly, a third development 104 is indicated by a dotted line and referred to by reference numeral 104.

As can be seen, the first, second and third developments 100-104 show different courses during an actuation time of the reductant injector 32 between point in time t1 and point in time t2. In the specific example shown in Fig. 4, the rate of change of the pump current or the rate of change of a duty cycle of the pump 54 increases for developments 100 and 102 between point in time t1 and point in time t2. The rate of change for development 100 increases stronger than for development 102. The rate of change for development 104 stays equal between point in time t1 and t2.

In the example shown in Fig. 4, the development 100 indicates that the nozzle outlet 41 of the reductant injector 32 is free or almost free of deposits. At the time the reductant injector 32 is actuated (opened), the reductant is injected into the SCR conduit 30. The pressure in the SCR injection system 50 drops. The pump 54 is controlled by the control unit 58 to maintain a constant operating pressure in the SCR injection system 50. For example, the operating pressure may be within a range between about 6 bar and about 12 bar, for example about 9 bar. For increasing the pressure to operating pressure in case of actuation of the reductant injector 32, the pump 54 must be activated or must increase its output. The rate of change of the pump duty cycle or the input current of the pump 54 increases during the actuation time of the reductant injector 32. For example, the pump 54 is frequently actuated during the actuation time period of the reductant injector 32, which may also include a plurality of actuations. The monitored current input or duty cycle of the pump 54 in dependence of the actuation time period of the reductant injector 32 thus indicate that the nozzle outlet 41 is free or almost free of deposits. Accordingly, the control unit 58 determines that no deposit mitigation strategy is required.

Particularly, according to the method of the present disclosure, the operating condition of the pump 54 is monitored at least during actuation of the reductant injector 32. The method may further include monitoring the operating condition of the pump 54 also after the actuation time period of the reductant injector 32, because it may take some time until the pressure level increases to the desired operating pressure after the reductant injector 32 is deactivated and stops injection of reductant. For example, the power input may be monitored until the power input of the pump 54 takes a constant power input value or a predetermined normal power input value stored in the control unit 58 after actuation of the reductant injector 32. As another example, the operating condition may be monitored until a rate of change of the operating condition falls below a threshold.

For example, the control unit 58 includes any memory device known in the art for storing data. The data relates to an assumed or estimated deposit or clogging (degree) of the nozzle outlet 41 of the reductant injector 32 depending on the operating condition of the pump 54 in relation to the actuation time period of the reductant injector 32. In other words, a predefined data set may output a deposit mitigation strategy or a determination whether a deposit mitigation strategy is required or similar based on the actuation time period of the reductant injector 32 and the monitored operating condition of the pump 54, which serve as input values. The data may be stored in the form of one or more maps, tables, graphs and/or equations. The data may include a compilation of data collected from lab and/or field operation of the SCR injection system 50. The data may be generated by performing instrumented tests on the operation of the SCR injection system 50 under various operating conditions while varying parameters associated therewith or performing various measurements. The control unit 58 references the data to determine the assumed or estimated deposit or clogging degree of the nozzle outlet. Based on that determination, the control unit 58 determines whether it is necessary to perform a deposit mitigation strategy for reducing deposits at or near the nozzle outlet 41. In the case of the curve 100, the control unit 58 determines that no deposit mitigation strategy is necessary.

As another example, the development 102 indicates that the nozzle outlet 41 of the reductant injector 32 is already partially blocked by deposits. During the actuation time period of the reductant injector 32, the rate of change of the power input or the duty cycle of the pump 54 is lower than for normal operation as indicated by development 100. Due to the partial blockage of the nozzle outlet 41 of the reductant injector 32, less reductant is injected compared to normal operation with a clean nozzle outlet 41. The pressure in the SCR injection system 50 drops, however, not as much as in the case of the development 100, which indicated a clean nozzle outlet 41. As a result, the rate of change of the operating condition (pump duty cycle, pump power input) increases to maintain a constant operating pressure during the actuation time period of the reductant injector 32, however, not as much as in the case of the development 100. The monitored rate of change of the operating condition of the pump 54 in dependence of the actuation time period of the reductant injector 32 thus indicate that the nozzle outlet 41 is partially blocked. The control unit 58 may determine a deposit mitigation strategy is not yet required, or may determine that a deposit mitigation strategy is required for cleaning the partially blocked nozzle outlet 41.

As yet another example, the development 104 indicates that the nozzle outlet 41 of the reductant injector 32 is fully blocked by deposits, because the rate of change of the operating condition of the pump 54 is about zero although the reductant injector 32 is actuated.

In some embodiments, the actuation time period of the reductant injector 32, particularly the actuator 43, may be detected by a timer. Additionally or alternatively, for example, the actuation time period may be a target actuation time period of the reductant injector 32, particularly the actuator 43, as controlled by the control unit 58 for dosing reductant into the SCR conduit 30 as desired. The target actuation time period may be determined based on a calibration which correlates a desired dosing rate for the SCR injection by the SCR injection system 50 with a required target actuation time period for obtaining the desired dosing rate.

The control unit 58 may be able to determine a deposit or clogging degree based on the monitored operating condition(s) of the pump 54 and the actuation time period of the reductant injector 32. In this case, the control unit 58 may select one deposit mitigation strategy of a plurality of deposit mitigation strategy based on the determined deposit or clogging degree. For example, a more effective or enhanced deposit mitigation strategy may be chosen in the situation shown by development 104 compared to the situation shown by development 102.

Examples of deposit mitigation strategies include increasing the exhaust gas temperature, increasing an exhaust gas mass flow, pumping a reductant to the reductant injector 32 to dissolve deposits, and/or increasing a dosing rate for the SCR injection. For example, an "enhanced" deposit mitigation strategy may include increasing the exhaust gas temperature to a higher temperature than a "standard" deposit mitigation strategy.

In some embodiments, the method further includes a check whether the valve member 42 actually moved during actuation of the reductant injector 32. For example, the actuator 43 of the reductant injector 32 may be a solenoid. By monitoring the current input of the reductant injector 32, particularly a change in the current input of the actuator, it is possible to determine whether the valve member 42 has moved during actuation. In other embodiments, a dedicated sensor or any other means for determining whether the valve member 42 actually moves during actuation may be provided. In case data received by the control unit 58 indicates that the valve member 42 does not move although the reductant injector 32 is actuated, the control unit 58 determines that a failure of the reductant injector 32 occurred. Otherwise, in case the data indicates that the valve member 42 moved during actuation, the control unit 58 determines whether a deposit mitigation strategy is required based on the monitored operating condition(s) of the pump 54 and the actuation time period of the reductant injector 32.

In some embodiments, the method may further include a check whether a pressure drop occurred during the actuation of the reductant injector 32 is within a preset acceptable range. The pressure drop may be measured by the pressure sensor 56. In case data from the pressure sensor 56 received by the control unit 58 indicates that the pressure drop is not within the preset acceptable range, for example within a range between about 0.5 bar and about 5 bar, the control unit 58 determines that a failure of the reductant injector 32 occurred. Otherwise, in case the data indicates that the pressure drop is within the preset acceptable range, the control unit 58 determines whether a deposit mitigation strategy is required based on the monitored operating condition(s) of the pump 54 and the actuation time period of the reductant injector 32.

In some embodiments, the method step of actuating the reductant injector for an injector actuation time period includes actuating the reductant injector to partially or fully open. Then, the step of determining to perform a deposit mitigation strategy may be further based on the opening degree of the reductant injector.

It should be noted that the method for monitoring the SCR injection system 50 as disclosed herein can be carried out during normal operation of the SCR injection system 50 without requiring any special detection operation mode. Accordingly, the method can be implemented to be performed during normal operation of the internal combustion engine 19. For example, the method steps of actuating the reductant injector 32, monitoring at least one operating condition of the pump 54 and determining whether to perform a deposit mitigation strategy are continuously repeated in a closed loop during operation of the SCR injection system 50 and the internal combustion engine 19.

### Industrial Applicability

The method for monitoring an SCR injection system, and the SCR injection system as disclosed herein are applicable in internal combustion engines equipped with an SCR system.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

## Claims

1. A method for monitoring an SCR injection system (50) including a pump (54) and a reductant injector (32), the method including:
operating the pump (54) to maintain a constant operating pressure in the SCR injection system (50);
actuating the reductant injector (32) for an injector actuation time period;
monitoring at least one operating condition of the pump (54) at least during the injector actuation time period of the reductant injector (32); and
determining to perform a deposit mitigation strategy based on the monitored operating condition of the pump (54) and the injector actuation time period of the reductant injector (32).

2. The method of claim 1, wherein the step of monitoring at least one operating condition of the pump (54) comprises monitoring a rate of change of the at least one operating condition of the pump (54).

3. The method of claim 1 or claim 2, wherein the at least one operating condition of the pump (54) comprises a pump actuation time period of the pump (54), a pump actuation frequency of the pump (54), a duty cycle of the pump (54), a flow rate of the pump (54), and/or a speed of the pump (54).

4. The method of any one of the preceding claims, wherein the at least one operating condition of the pump (54) comprises a power input of the pump (54), particularly a current input of the pump (54).

5. The method of any one of the preceding claims, wherein the reductant injector (32) includes a movable valve member (42), the method further including:
determining that the valve member (42) moved during actuation of the reductant injector (32); and
wherein the method step of determining to perform the deposit mitigation strategy is performed if the valve member (42) has moved.

6. The method of any one of the preceding claims, wherein the method step of determining to perform the deposit mitigation strategy is further based on at least one engine operating condition of an engine system (10) including the SCR injection system (50).

7. The method of any one of the preceding claims, wherein the method step of determining to perform the deposit mitigation strategy uses a predefined data set including the injector actuation time period of the reductant injector (32) and the at least one operating condition of the pump (54) as input values.

8. The method of any one of the preceding claims, wherein the method step of monitoring the at least one operating condition of the pump (54) at least during actuation of the reductant injector (32) includes monitoring the operating condition of the pump (54) after the injector actuation time period of the reductant injector (32).

9. The method of claim 8, wherein the at least one operating condition of the pump (54) is monitored until a rate of change of the operating condition drops below a preset threshold.

10. The method of any one of the preceding claims, wherein the method step of determining to perform the deposit mitigation strategy includes selecting one deposit mitigation strategy of a plurality of deposit mitigation strategies based on the monitored operating condition of the pump (54) and the injector actuation time period of the reductant injector (32).

11. The method of any one of the preceding claims, wherein the deposit mitigation strategy includes at least one of increasing the exhaust gas temperature, increasing an exhaust gas mass flow, pumping a reductant to the reductant injector (32), and increasing a dosing rate for the SCR injection.

12. The method of any one of the preceding claims, wherein the method is performed during normal operation of the SCR injection system (50) and/or normal operation of an engine system (10) including the SCR injection system (50).

13. The method of any one of the preceding claims, wherein the method steps are continuously repeated in a closed loop during operation of the SCR injection system (50).

14. An SCR injection system (50) for an internal combustion engine (10), comprising:
a reductant tank (52);
a reductant injector (32);
a pump (54) fluidly connecting the reductant tank (52) and the reductant injector (32); and
a control unit (58) configured to perform a method according to any one the preceding claims.

15. The SCR injection system (50) of claim 14, further comprising at least one sensor (60) configured to monitor at least one operating condition of the pump (54), particularly an amperemeter, a timer, a counter, a flow measuring device, and/or a speed measuring device.
